# EUROPEAN PATENT APPLICATION

(11) **EP 4 826 502 A1**
(43) Date of publication of application: **21.10.2026**
(21) Application number: 24918940.8
(22) Date of filing: 22.10.2024
(51) Int. Cl.: G06F 3/04842, G06F 3/0482, G06F 3/04817, G11B 27/031, G06V 20/40, G06N 3/0475

(54) **ELECTRONIC DEVICE AND METHOD FOR EDITING CONTENT, AND STORAGE MEDIUM**

(30) Priority: 16.01.2024 KR 20240006541; 25.03.2024 KR 20240040614
(71) Applicant: Samsung Electronics Co., Ltd., Suwon-si, Gyeonggi-do 16677 (KR)
(72) Inventor: NAM, Sungguk, Suwon-si, Gyeonggi-do 16677 (KR); KIM, Moonsoo, Suwon-si, Gyeonggi-do 16677 (KR); MUN, Jihun, Suwon-si, Gyeonggi-do 16677 (KR); YANG, Chulju, Suwon-si, Gyeonggi-do 16677 (KR); YOO, Nagyeom, Suwon-si, Gyeonggi-do 16677 (KR)
(74) Representative: HGF
(86) International application number: PCT/KR2024/016092
(87) International publication number: WO 2025/154906

(57) **Abstract**

An electronic device and a method for editing content, and a storage medium are provided. The electronic device comprises: a display; at least one processor; and a memory for storing an instruction executed by the at least one processor. The instruction stored in the memory is configured to cause the electronic device to display, through the display, content including a first object in a first portion, and display, in a second portion, a timeline area related to the content. The timeline area includes a period of time corresponding to the first object and a first indicator indicating the first object. The instruction stored in the memory is configured to cause the electronic device to receive a first user input related to the period of time or the first indicator. The instruction stored in the memory is configured to cause the electronic device to generate modified content using an artificial intelligence model by replacing the first object with a second object generated using the artificial intelligence model at least partially on the basis of a user input. The instruction stored in the memory is configured to cause the electronic device to display the modified content in the first portion through the display.

## Description

### [Technical Field]

Embodiments of the disclosure relate to an electronic device, a method, and a storage medium, and more particularly, to an electronic device, a method, and a storage medium for editing content.

### [Background Art]

Electronic devices may include cameras. As communication technologies advance and performance of cameras improves, generation of content has been increasing. Content may include an image, and the image may include a static image (e.g., still image) and/or a dynamic image (e.g., video). For example, a user may generate an image (e.g., still image and/or video) and post the generated image to a social network service (SNS). The user may generate a video and post the generated video to a media content platform.

The generated image may be edited. For example, in the case of a static image, the user may modify or delete an object included in the image. Alternatively, the user may acquire (or generate) a new object and add the acquired object to the image. In the case of a dynamic image, the user may remove an image in a specific time domain. Alternatively, the user may copy and add an image in a specific time domain. The user may modify or delete an object included in the dynamic image. Alternatively, the user may acquire (or generate) a new object and add the acquired object to the dynamic image.

The above information may be provided as the related art for the purpose of helping to understand the disclosure. None of the above description may be used for being claimed as the prior art related to the disclosure or determining the prior art.

### [Disclosure of Invention]

### [Technical Problem]

The disclosure may provide an electronic device, a method, and a storage medium for identifying an object included in content and editing the identified object.

### [Solution to Problem]

According to various embodiments of the disclosure, an electronic device may include a display, at least one processor, and a memory storing instructions executed by the at least one processor. The instructions stored in the memory may be configured to cause the electronic device to display, through the display, content including a first object in a first portion and to display, in a second portion, a timeline area associated with the content. The timeline area may include a timeline corresponding to the first object and a first indicator indicating the first object. The instructions may be configured to cause the electronic device to receive a user input associated with the timeline or the first indicator. The instructions may be configured to cause the electronic device to generate modified content using an artificial intelligence model by replacing, at least partially based on the user input, the first object with a second object generated using the artificial intelligence model. The instructions may be configured to cause the electronic device to display the modified content in the first portion through the display.

According to various embodiments of the disclosure, a method of editing content may include displaying, in a first portion of a display, content including a first object and displaying, in a second portion of the display, a timeline area associated with the content. The timeline area may include a timeline corresponding to the first object and a first indicator indicating the first object. The method may include receiving a user input associated with the timeline or the first indicator. The method may include generating modified content using an artificial intelligence model by replacing, at least partially based on the user input, the first object with a second object generated using the artificial intelligence model. The method may include displaying the modified content in the first portion.

According to various embodiments of the disclosure, instructions recorded on a non-transitory computer-readable storage medium on which a program for performing a method of editing content is recorded may be configured to cause the electronic device to display, in a first portion of a display, content including a first object and to display, in a second portion of the display, a timeline area associated with the content. The timeline area may include a timeline corresponding to the first object and a first indicator indicating the first object. The instructions may be configured to cause the electronic device to receive a user input associated with the timeline or the first indicator. The instructions may be configured to cause the electronic device to generate modified content using an artificial intelligence model by replacing, at least partially based on the user input, the first object with a second object generated using the artificial intelligence model. The instructions may be configured to cause the electronic device to display the modified content in the first portion.

### [Brief Description of Drawings]

FIG. 1 is a block diagram illustrating an electronic device in a network environment according to various embodiments.
FIG. 2 is a block diagram illustrating a constitution of an electronic device according to various embodiments.
FIGS. 3A, 3B, 3C, 3D, and 3E are diagrams illustrating a process of editing an object according to various embodiments.
FIGS. 4A and 4B are diagrams illustrating screens displayed over time according to various embodiments.
FIGS. 5A, 5B, 5C, 5D and 5E are diagrams illustrating management and editing of objects using an object list according to various embodiments.
FIGS. 6A, 6B, 6C and 7 are diagrams illustrating a method of displaying a plurality of objects within content and a timeline corresponding to the plurality of objects according to various embodiments.
FIG. 8 is a flowchart illustrating a method of editing content according to various embodiments.

### [Mode for the Invention]

Hereinafter, embodiments of the disclosure will be described in detail with reference to the drawings so that those skilled in the art to which the disclosure pertains can readily practice the disclosure. However, the disclosure may be embodied in various different forms and is not limited to the embodiments described herein. In the drawings and the related description, the same or similar reference numerals may be used to denote the same or similar components. In addition, in the drawings and related descriptions, descriptions of well-known functions and constitutions may be omitted for clarity and brevity.

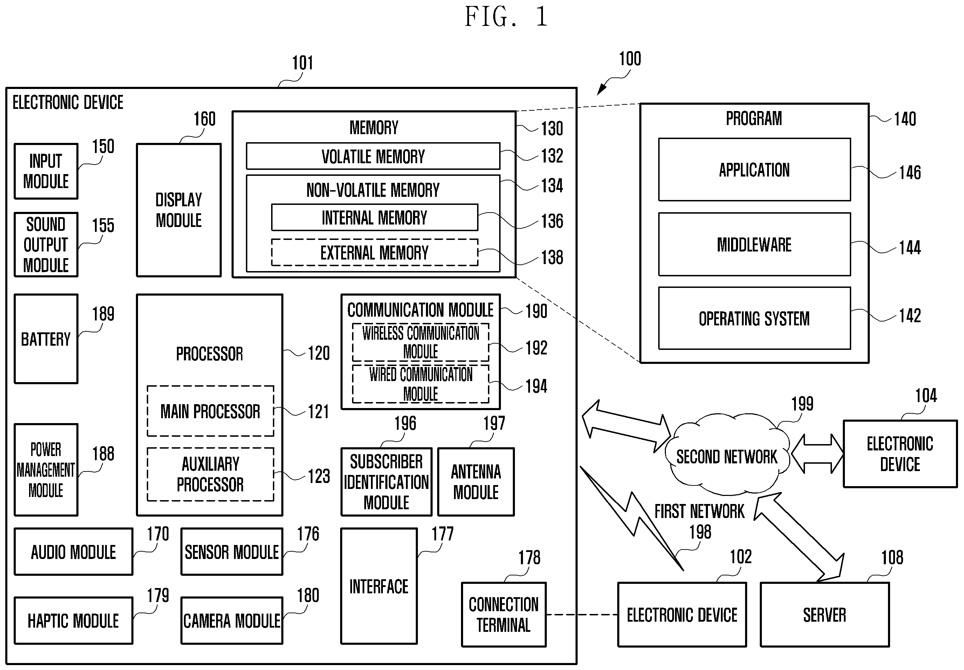

FIG. 1 is a block diagram illustrating an electronic device 101 in a network environment 100 according to various examples. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an example, the electronic device 101 may communicate with the electronic device 104 via the server 108. According to an example, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some examples, at least one of the components (e.g., the connection terminal 178) may be omitted from the electronic device 101, or one or more other components may be added in the electronic device 101. In some examples, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an example, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an example, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an example, the display module 160 may include a touch sensor adapted to detect a touch, or a pressure sensor adapted to measure the intensity of force incurred by the touch.

The audio module 170 may convert a sound into an electrical signal and vice versa. According to an example, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an example, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an example, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an example, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an example, the haptic module 179 may include, for example, a motor, a piezoelectric element, or an electric stimulator.

The camera module 180 may capture a still image or moving images. According to an example, the camera module 180 may include one or more lenses, image sensors, image signal processors, or flashes.

The power management module 188 may manage power supplied to the electronic device 101. According to one example, the power management module 188 may be implemented as at least part of, for example, a power management integrated circuit (PMIC).

The battery 189 may supply power to at least one component of the electronic device 101. According to an example, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an example, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an example, the antenna module 197 may include an antenna including a radiating element composed of a conductive material or a conductive pattern formed in or on a substrate (e.g., a printed circuit board (PCB)). According to an example, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an example, another component (e.g., a radio frequency integrated circuit (RFIC)) other than the radiating element may be additionally formed as part of the antenna module 197.

According to various examples, the antenna module 197 may form an mmWave antenna module. According to an example, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an example, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an example, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various examples may be one of various types of electronic devices. The electronic devices may include, for example, a portable communication device (e.g., a smartphone), a computer device, a portable multimedia device, a portable medical device, a camera, a wearable device, or a home appliance. According to an example of the disclosure, the electronic devices are not limited to those described above.

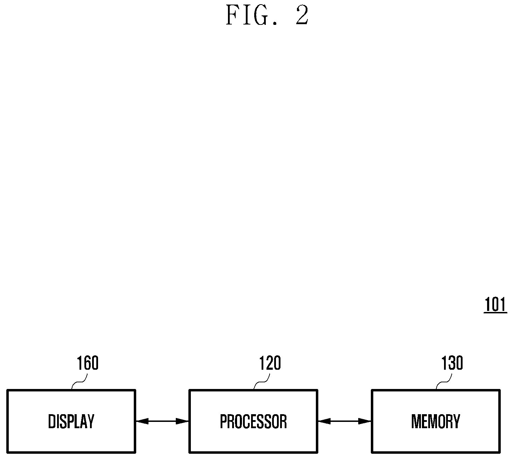

FIG. 2 is a block diagram illustrating a constitution of an electronic device according to various embodiments.

With reference to FIG. 2, an electronic device 101 may include a memory 130, a display 160, and a processor 120.

The memory 130 (e.g., the memory 130 of FIG. 1) may store data, algorithms, programs, and instructions, and the like for performing functions of the electronic device 101 (e.g., the electronic device 101 of FIG. 1). The instructions stored in the memory 130 may be loaded into the processor 120 and executed. For example, the memory 130 may store content, information on an object included in the content, and/or an object generation artificial intelligence model. As an example, the content may include an image, and the image may be a video and/or a still image. For example, the object generation artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited to the examples described above. The object generation artificial intelligence model may be included in an artificial intelligence computing module of the electronic device 101. For example, the object generation artificial intelligence model may be included in an artificial intelligence computing module of a separate server (e.g., the server 108 of FIG. 1). The object generation artificial intelligence model may be implemented as logic, firmware, software, and/or hardware modules capable of performing operations using the artificial intelligence computing module. The object generation artificial intelligence model may be a model trained by machine learning or deep learning. As an example, the object generation artificial intelligence model may generate an image using various computational models, such as a generative adversarial network (GAN), a vector quantization GAN (VQ-GAN), a variational auto-encoder (VAE), a VQ-VAE, a diffusion model, and a diffusion-GAN model.

A GAN model is one type of artificial neural network used in generative modeling and may generate synthetic data similar to real data using a generator. The GAN model may train the generator by comparing and evaluating images generated by the generator with real images using a discriminator. A VAE model is a type of probabilistic artificial neural network and may encode data into a probability distribution in a latent space. The VAE model may function as a generator. The VAE model may extract and sample features (e.g., eyes, nose, mouth, etc.) that best represent an input image X through an encoder to generate a latent vector Z. The VAE model may generate new data from Z that is most similar to X through a decoder. Compared to the GAN model, the VAE model may further include an encoder and a decoder, and the VAE model may train the latent vector, the encoder, and the decoder. A diffusion model may perform a forward process (diffusion process) of gradually adding noise to data to convert the data into noise, and a reverse process of gradually restoring data from the noise.

The display 160 may display an image area and a timeline area. For example, the video area may include an image (or content) including an object. The timeline area may include a timeline (e.g., a time period) of an object included in the image. As an example, the object may include a person, an animal, a plant, a building, a vehicle, a sky, a cloud, a sun, a mountain, and/or a river included in the image. The timeline of the object may correspond to the object included in the image. For example, when the image includes a first object, a second object, and a third object, the timeline of the object may include a timeline of the first object, a timeline of the second object, and a timeline of the third object. The timeline of the object may include information from a time point at which the object appears in the image to a time point at which the object disappears from the image. For example, when an object (e.g., a bus) appears at 15 minutes 14 seconds of the image and disappears at 17 minutes 30 seconds, the timeline of the object may include time information from 15 minutes 14 seconds to 17 minutes 30 seconds. The timeline corresponding to the object may include an indicator indicating the object. For example, when the image includes a man (object), a timeline area may include a timeline of the man (object). The timeline of the man may include an indicator (e.g., an icon, a thumbnail, an image, or a text) indicating that the timeline corresponds to the man.

The processor 120 may control each component of the electronic device 101. The electronic device 101 may include one or more processors 120. For example, the processor 120 may refer to a plurality of processors configured to collectively perform a plurality of functions by distributing the functions among the processors.

The processor 120 may control the display 160 to display an image area and a timeline area. For example, the processor 120 may control the display 160 to display an image including an object in a first portion (e.g., an image area) of the display 160 and to display a timeline of the object in a second portion (e.g., a timeline area).

The processor 120 may identify an object included in an image. For example, the object may be an original object included when the image is generated or a generated object generated using an object generation artificial intelligence model. The processor 120 may analyze the image and obtain information on a time point at which the object appears in the image and a time point at which the object disappears from the image. The processor 120 may generate a timeline of the object based on the identified object and the obtained time information. For example, the image may include a plurality of objects over an entire duration (e.g., from a start time to an end time). The processor 120 may identify the plurality of objects and obtain time information for each of the identified plurality of objects. The processor 120 may generate a timeline corresponding to each object based on the identified plurality of objects and the obtained time information.

The processor 120 may display the generated timeline in a timeline area of the display 160. For example, the processor 120 may control the display 160 to simultaneously display an image area including an image and a timeline area including a timeline of an object. For example, the processor 120 may control the display 160 to display an image area including an image. When receiving a timeline display command from a user, the processor 120 may control the display 160 to display the timeline area together with the image area. The timeline may include an indicator indicating a corresponding object.

The processor 120 may control the display 160 to display timelines of objects distinguished according to attributes of the objects. For example, the attributes of an object may include an original attribute, an added attribute, and/or a modified attribute. The original attribute may indicate an object included when an image is generated and that has not been modified (or edited). The added attribute may indicate an object added after the image is generated. The modified attribute may indicate an attribute obtained by modifying an original object into a generated object. For example, the processor 120 may control the display 160 to display a plurality of timelines distinguished into a timeline of an object having the original attribute, a timeline of an object having the added attribute, and/or a timeline of an object having the modified attribute. For example, an image (or content) including an added object and/or a modified attribute may be a modified image (or modified content). The processor 120 may control the display 160 to display, in a second portion of the display 160, a timeline area including a plurality of sub-timeline areas. The processor 120 may control the display 160 to display a plurality of timelines associated with the modified image in the timeline area. The processor 120 may control the display 160 to display a timeline of an object in a corresponding sub-timeline area based on an attribute of the object among a plurality of timeline areas. For example, the processor 120 may control the display 160 to display a timeline of an object having the original attribute in a first timeline area, a timeline of an object having the added attribute in a second timeline area, and a timeline of an object having the modified attribute in a third timeline area.

For example, an attribute of an object may include a deleted attribute. The deleted attribute may indicate a deleted object. For example, the processor 120 may delete an object included in an image according to a user's command. The processor 120 may not display the deleted object in the image, but may control the display 160 to display a timeline corresponding to an object having the deleted attribute. The processor 120 may control the display 160 to display a timeline of an object having the deleted attribute in a timeline area separately from timelines of objects having other attributes (e.g., an original attribute, an added attribute, and/or a modified attribute). For example, the processor 120 may control the display 160 to display a timeline of the deleted object at another location in a second portion of the display 160. For example, the processor 120 may control the display 160 to display a timeline of the deleted object (or a timeline of an object having the deleted attribute) in a fourth timeline area.

If the image is a video, the number of objects included in the video may vary according to a time point. For example, at a first time point of the video, two objects may be included. Because a number of timelines corresponds to a number of objects, a timeline area at the first time point may include two timelines. At a second time point of the video, ten objects may be included. A timeline area at the second time point may include ten timelines. A number of timelines of the object displayable in the timeline area may be fixed. For example, a number of timelines displayable in the timeline area may be five. If the number of objects (or object timelines) included at a specific time point of the video exceeds the number displayed (displayable) in the timeline area, the processor 120 may divide the video into a plurality of regions. The processor 120 may group timelines of objects included in each region into groups and control to the display 160 to display groups of the grouped timelines. As another example, the processor 120 may divide the video into a plurality of regions and control the display 160 to display the plurality of regions. When one of the plurality of separated regions is selected, the processor 120 may control the display 160 to display only timelines of objects included in the selected region in the timeline area.

The processor 120 may receive, from a user, an input for selecting an object. For example, the selected object may include an original object (e.g., an object having an original attribute) or a generated object (e.g., an object having a modified attribute or an object having an added attribute). When the input for selecting an object is received, the processor 120 may apply an image effect to the selected object and/or a timeline of the selected object. For example, the image effect may include a color change, a border change, and/or highlighting. The processor 120 may receive a zoom-in input or a zoom-out input on a timeline of the object. For example, the zoom-in input may include a pinch-out gesture, and the zoom-out input may include a pinch-in gesture. When the zoom-in input or the zoom-out input is received, the processor 120 may control the display 160 to zoom in or zoom out an image with respect to an object corresponding to the timeline.

The processor 120 may replace a selected object with a generated object generated by an object generation artificial intelligence model and control the display 160 to display the generated object instead of the selected object. For example, when an object included in a video is selected, the processor 120 may control the display 160 to display a plurality of candidate objects generated by the object generation artificial intelligence model. When one of the plurality of displayed candidate objects is selected, the processor 120 may replace the object included in the video with the object selected from the plurality of candidate objects.

As an example, the processor 120 may control the display 160 to display a list of objects included in a video according to a user input. For example, the list of objects may include all identified objects. The processor 120 may classify objects according to attributes of the objects and control the display 160 to display a list of objects including the classified objects. For example, an attribute of an object may include an original attribute, an added attribute, a modified attribute, and/or a deleted attribute. When an object included in the list of objects is selected, the processor 120 may control the display 160 to move a video displayed in a video area to a time point at which the selected object appears. Objects included in the list of objects may have different appearance time points and/or disappearance time points. As an example, a first object may appear at 11 minutes 10 seconds and disappear at 13 minutes 25 seconds. A second object may appear at 12 minutes 50 seconds and disappear at 17 minutes 10 seconds. When the first object is selected from the list of objects, the processor 120 may control the display 160 to move the displayed video to a time point of 11 minutes 10 seconds.

The processor 120 may control the display 160 to display a management menu together with objects included in a list of objects. When the management menu is selected, the processor 120 may control the display 160 to display a plurality of candidate objects associated with the object and generated by an object generation artificial intelligence model. When one of the plurality of displayed candidate objects is selected, the processor 120 may replace the object in the video with the selected generated object without moving the video to a time point at which the object appears.

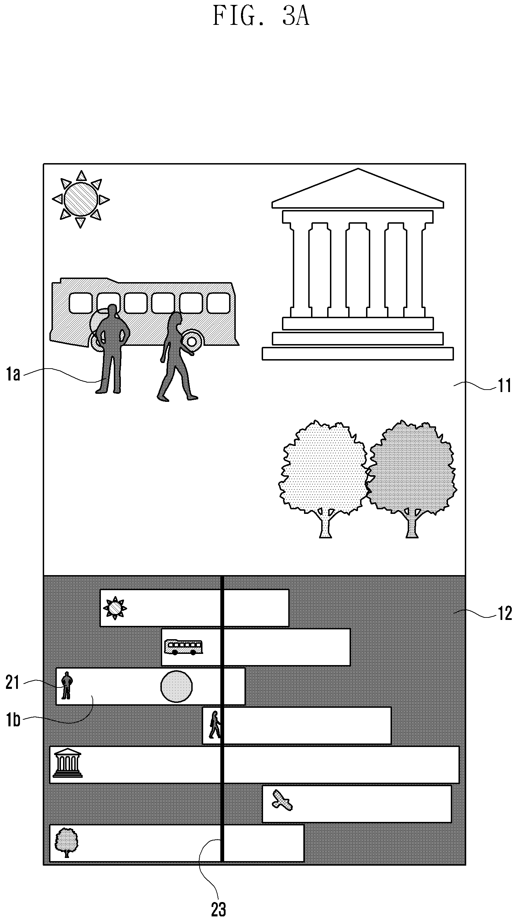

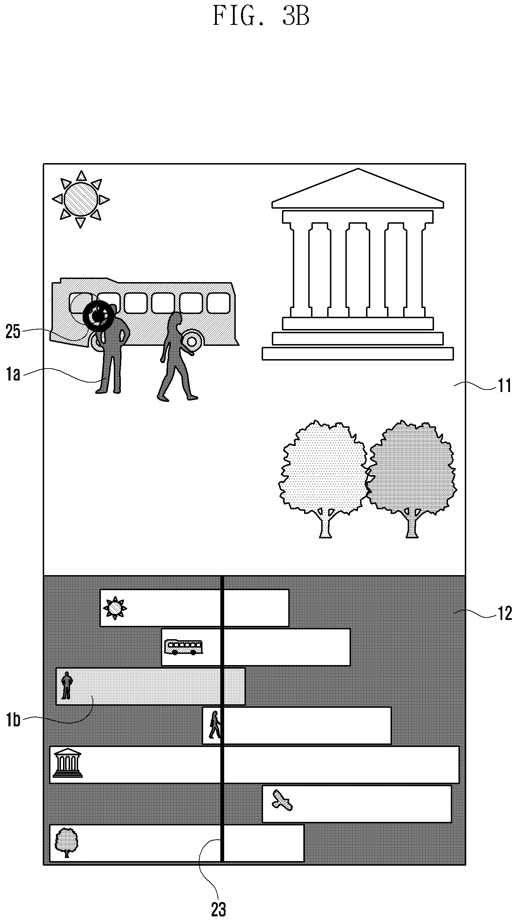

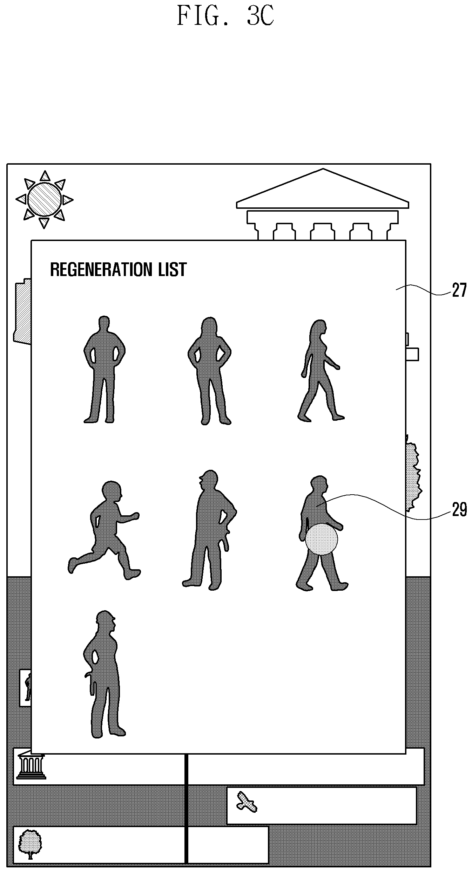

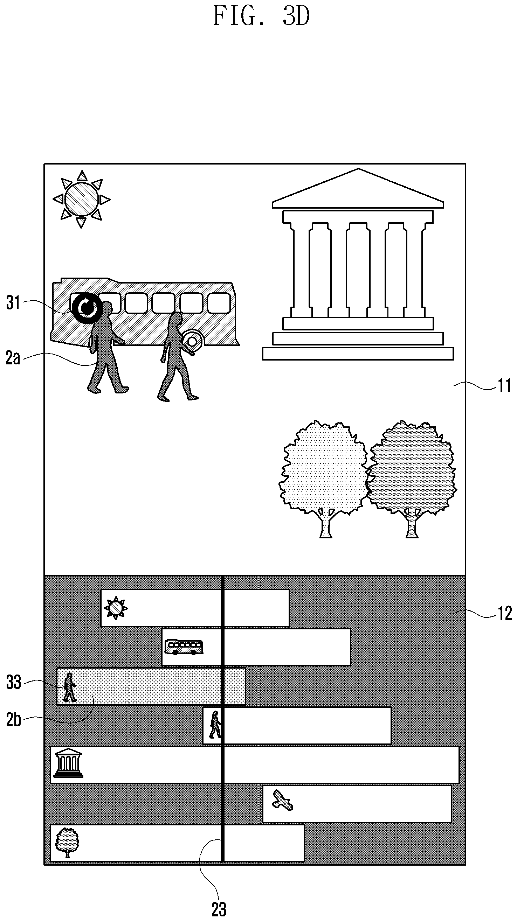

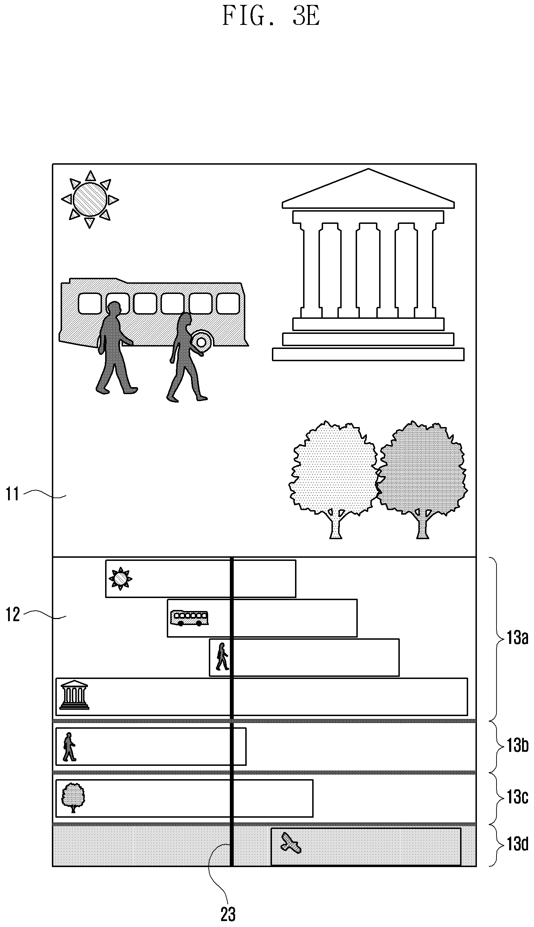

FIGS. 3A, 3B, 3C, 3D, and 3E are diagrams illustrating a process of editing an object according to various embodiments.

With reference to FIG. 3A, an image area 11 and a timeline area 12 are illustrated. An image may be displayed in the image area 11. A timeline of an object included in the video may be displayed in the timeline area 12. For example, the image may be a video, and a video of a specific time point may be displayed in the video area 11. The timeline area 12 may display a timeline of an object included in the currently displayed video. The timeline area 12 may include an indicator 23 indicating a current time point of the video.

For example, if a video currently displayed in the video area 11 includes seven objects, a timeline corresponding to each of the seven objects may be displayed in the timeline area 12. The timeline of each object may include information on a time point at which the object appears in the video and a time point at which the object disappears from the video. As an example, the currently displayed video may correspond to a time point of 12 minutes 30 seconds, and include an object of a man 1a. The object of the man 1a may appear in the video at 30 seconds and disappear at 13 minutes 20 seconds. The timeline area may display a timeline 1b corresponding to the object of the man 1a. The timeline corresponding to the object of the man 1a may include information from 30 seconds, at which the object of the man 1a appears, to 13 minutes 20 seconds, at which the object of the man 1a disappears.

The electronic device 101 may receive an input for selecting an object included in a video. For example, the input for selecting the object may be received on the object included in the video and on a timeline.

With reference to FIG. 3B, as an example, a screen in which an object of a man 1a is selected is illustrated. When an object is selected, the electronic device 101 may display an object change item 25 on the object included in the video and display an image effect on a timeline of the object. For example, the object change item (e.g., indicator) 25 may be displayed in the form of a button or an icon. The image effect may include a color change of the timeline, a border change, and/or highlighting. As an example, when the object of the man 1a is selected, the electronic device 101 may display the object change item 25 on the object of the man 1a and display an image effect on the timeline 1b corresponding to the object of the man 1a. For example, the object change item 25 may be displayed on the timeline corresponding to the object. As an example, when the object of the man 1a is selected, the electronic device 101 may display the object change item 25 on the timeline 1b corresponding to the object of the man 1a and display an image effect on the object of the man 1a.

With reference to FIG. 3C, a candidate object list 27 for changing a selected object may be displayed. An object included in the video may be changed by selecting the object change item 25 displayed on the object or by selecting a timeline of the object.

As an example, when a first user input (e.g., long press) is received on the timeline 1b corresponding to the object of the man 1a, the electronic device 101 may display a selectable candidate object list 27. For example, the candidate object list 27 may include generated objects generated by an object generation artificial intelligence model. One or more generated objects may be included in the candidate object list 27. When one of generated objects 29 included in the candidate object list 27 is selected, the electronic device 101 may change the object of the man 1a to the selected generated object 29. As an example, when the object of the man 1a is in a standing state and the selected generated object 29 is in a walking state, the electronic device 101 may change the object of the standing man 1a included in the video to a generated object 29 of a walking man.

As an example, when a second user input (e.g., short press) is received on the object change item 25 displayed on the object of the man 1a or on the timeline 1b corresponding to the object of the man 1a, the electronic device 101 may change the object of the man 1a to a generated object generated by an object generation artificial intelligence model. The electronic device 101 may immediately change the object of the man 1a to a generated object of the man in a different form without displaying a candidate object list 27. The electronic device 101 may sequentially change the object of the man 1a to generated objects of different forms included in candidate objects whenever the second user input is received on the object change item 25. For example, when the object change item 25 is selected, the electronic device 101 may change the object of the man 1a to a first generated object. When the second user input is received again on the object change item 25, the electronic device 101 may change the first generated object to a second generated object. As an example, the electronic device 101 may receive a text and/or voice input from a user while an object is selected, and generate a new object by generating a prompt for object change based on the received text and/or voice input. For example, the electronic device 101 may obtain information for object generation from the received text and/or voice input and generate a prompt including the obtained information. The electronic device 101 may generate a new object based on the generated prompt and change an existing object to the generated object.

With reference to FIG. 3D, a screen in which an object included in a video is changed is illustrated. As an example, the electronic device 101 may display a generated object of a walking man 2a instead of an object of a standing man 1a according to a user input. The electronic device 101 may change an indicator 33 indicating an object of a timeline 2b to correspond to the changed object according to the change of the object. For example, when the object is changed to a generated object of the walking man 2a, the indicator 33 may also be changed to a shape corresponding to the walking man. The electronic device 101 may maintain an object change item 31 on the object and an image effect on the timeline 1b until the object change is finally confirmed. When a user input is received in either the video area 11 or the timeline area 12, the electronic device 101 may confirm the change to the currently displayed generated object and remove the object change item 31 and the image effect. As an example, when the electronic device 101 changes an existing object to a generated object, the electronic device 101 may provide a timeline editing user interface (UI) for adjusting a time at which the object appears and a time at which the object disappears. For example, when a touch input (e.g., long touch input) is received on the timeline, the electronic device 101 may provide the timeline editing UI. The timeline editing UI may include an interval adjustment bar for adjusting a timeline interval at an end of the timeline. The interval adjustment bar at the end of the timeline may be moved left and right by a user input. Through the user input that adjusts (e.g., moves) the interval adjustment bar, a time (e.g., a time point at which the object appears, a time point at which the object disappears, and/or a time interval at which an object is displayed) on the timeline may be adjusted. For example, the timeline editing UI may provide a function for editing a movement distance and/or a direction of the object. As an example, the timeline editing UI may provide information on the movement distance and/or direction of the object. The timeline editing UI may provide an editing window for editing the distance and/or direction and/or a direction icon for selecting a direction. The user may refer to information on the movement distance and direction of objects provided in the timeline editing UI and edit the movement distance and/or direction of the object. As an example, the electronic device 101 may change the movement distance and/or direction of the object based on the distance and/or direction entered into the editing window. As an example, the electronic device 101 may receive an input for selecting a direction icon from the user and change a movement direction of the object based on the received input. As an example, the electronic device 101 may receive a touch input (e.g., drag touch input) from the user and change a movement distance and/or a direction of an object based on the received touch input.

With reference to FIG. 3E, a timeline area 12 in which timelines are distinguished and displayed according to attributes of objects is illustrated. The electronic device 101 may distinguish timelines of objects according to attributes of the objects and display the timelines in the timeline area 12. For example, the attributes of objects may include an original attribute, a modified attribute, an added attribute, and/or a deleted attribute. As an example, as illustrated in FIG. 3E, a sun object, a bus object, a woman object, and a building object may have the original attribute. A man object may have the modified attribute, and a tree object may have the added attribute. A bird object may have the deleted attribute. The electronic device 101 may display timelines of the sun object having an original attribute, the bus object, the woman object, and the building object in a first area 13a (or an original attribute area) of the timeline area 12. The electronic device 101 may display a timeline of the man object having a modified attribute in a second area 13b (or a modified attribute area) of the timeline area 12, and a timeline of the tree object having an added attribute in a third area 13c (or an added attribute area) of the timeline area 12. The electronic device 101 may display a timeline of the bird object having a deleted attribute in a fourth area 13d (or a deleted attribute area) of the timeline area 12. For example, a timeline area (e.g., the fourth area 13d) corresponding to a deleted object (e.g., bird) may be displayed in a form distinguishable from other timeline areas (e.g., the first area 13a, the second area 13b, and the third area 13c). As an example, the timeline area corresponding to the deleted object may be distinguished from other timeline areas by color, shading, transparency, line thickness, line type, and/or line color. As an example, a timeline corresponding to the deleted object may be distinguished from timelines included in other timeline areas by color, shading, transparency, line thickness, line type, and/or line color.

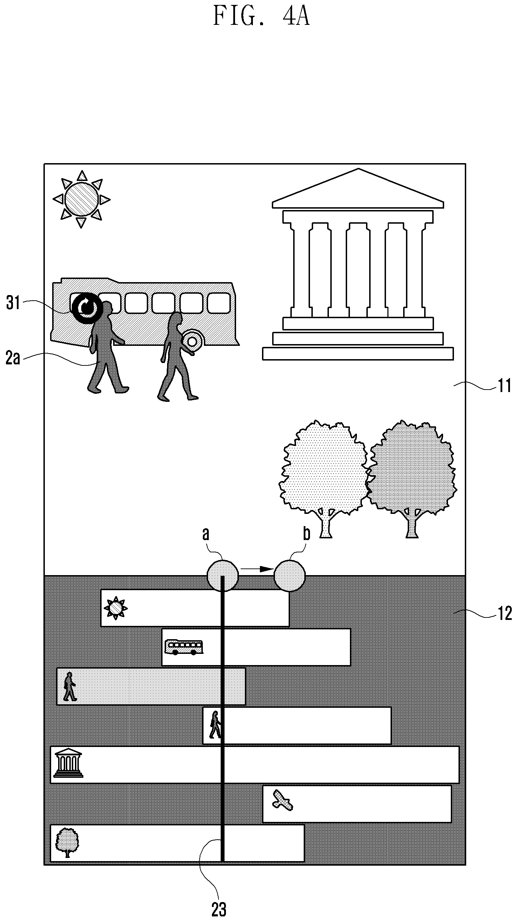

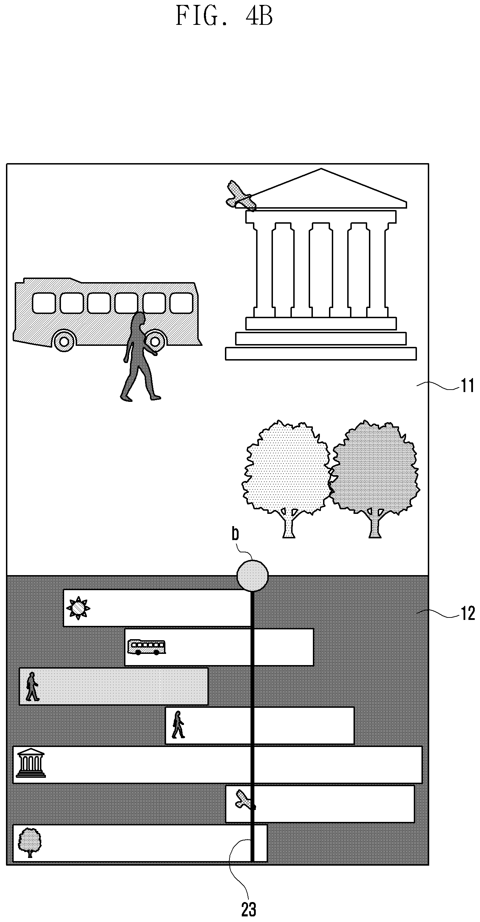

FIGS. 4A and 4B are diagrams illustrating screens displayed over time according to various embodiments.

With reference to FIG. 4A, a screen displaying a video at a time point a is illustrated. For example, the electronic device 101 may display the video at time point a in a video area 11 and display a timeline of an object included in the displayed video and an indicator 23 indicating the time point a of the video in a timeline area 12. The electronic device 101 may receive an input for a time point b from the indicator 23 indicating the time point of the video. The electronic device 101 may jump (or move discontinuously) the video from the time point a to the time point b according to the received input. As an example, when the electronic device 101 receives a first touch input (e.g., a short touch input or a single tap touch input) for the time point b from a user, the electronic device 101 may jump the video from time point a to the video at time point b.

As an example, the electronic device 101 may play (or continuously move) the video from the time point a to the time point b according to the received input. The electronic device 101 may continuously move the indicator 23 indicating a time point of the video from the time point a to the time point b to correspond to playback of the video. As an example, when the electronic device 101 receives a second touch input (e.g., a long touch input, a double-tap touch input, a drag touch input) for the time point b from a user, the electronic device 101 may play the video from the time point a to the time point b.

With reference to FIG. 4B, a screen displaying a video at the time point b is illustrated. The electronic device 101 may display the video at the time point b in the video area 11 and move the indicator 23 indicating a time point of the video to the time point b. An object (e.g., a bus, a woman, a building, a bird, or a tree) corresponding to a timeline in which the indicator 23 indicating the video at the time point b is positioned may be displayed in the video area 11.

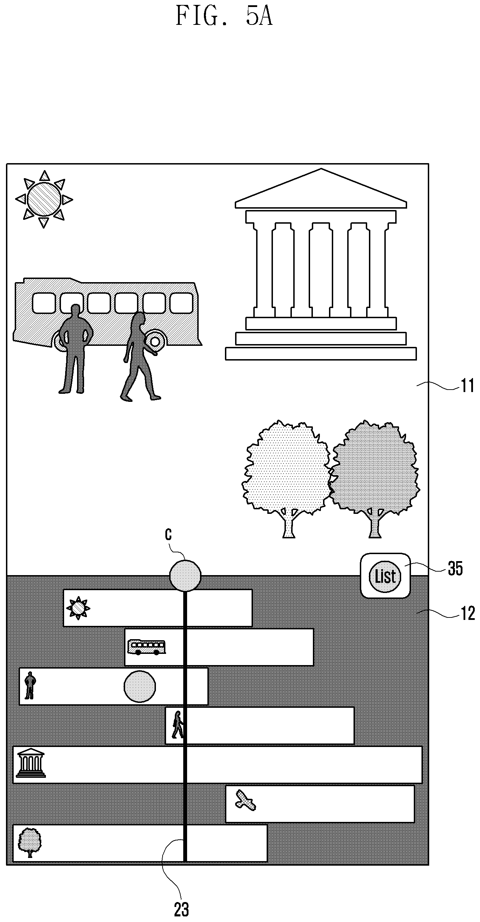

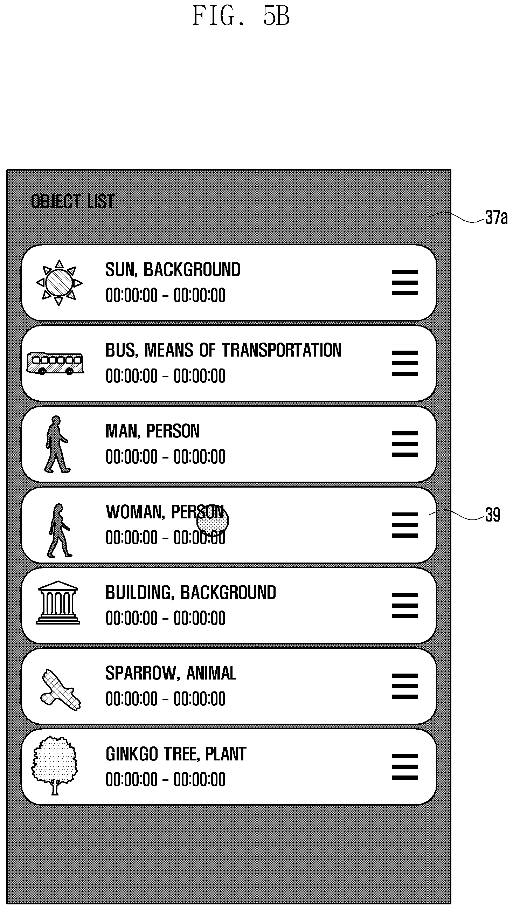

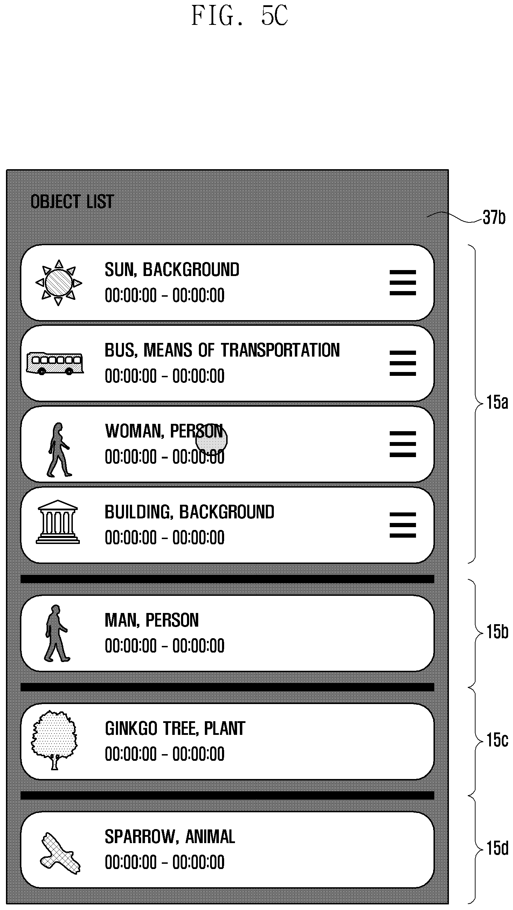

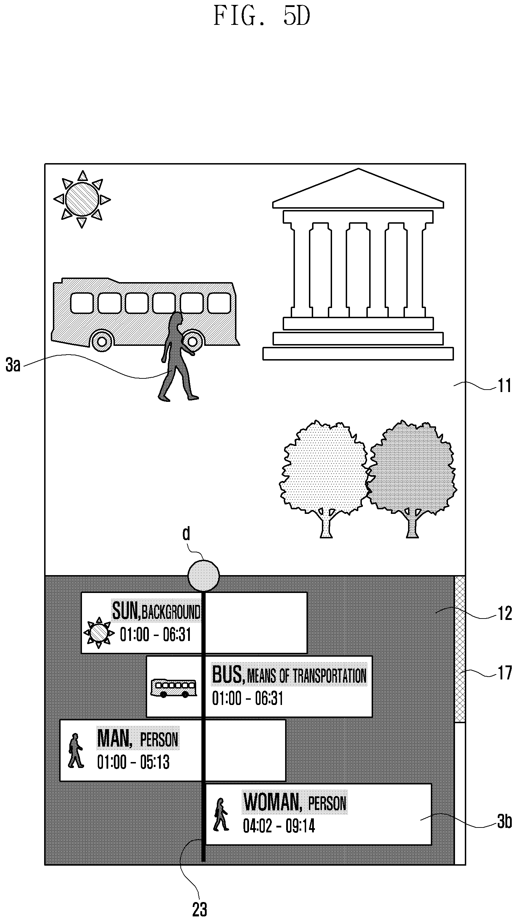

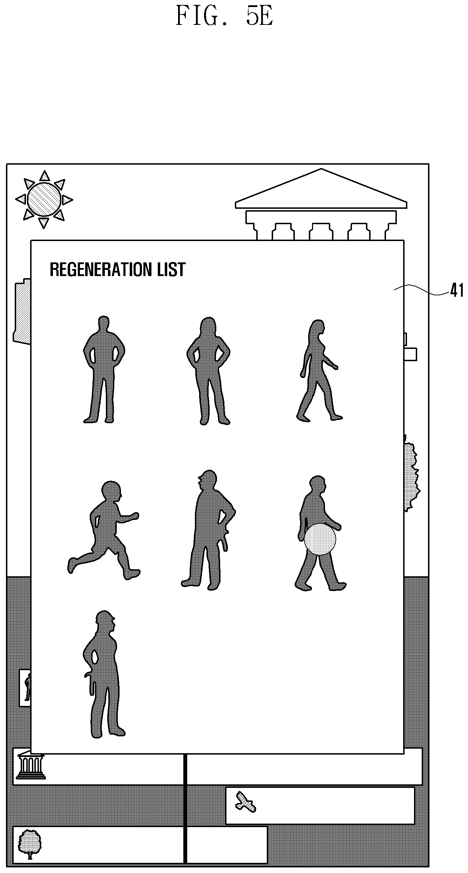

FIGS. 5A, 5B, 5C, 5D, and 5E are diagrams illustrating management and editing of objects using an object list according to various embodiments.

With reference to FIG. 5A, an electronic device 101 displaying a video at a time point c is illustrated. The electronic device 101 may display an item 35 for displaying a list of objects included in the video. The item 35 that displays the list of objects may be displayed in a preconfigured area within a video area 11 and/or a timeline area 12.

With reference to FIG. 5B, an object list 37a according to an embodiment is illustrated. When an item 35 for displaying a list of objects is selected, the electronic device 101 may display the object list 37a including information on objects included in the video. For example, the object information may include an indicator indicating an object, a category, a type, appearance time information, disappearance time information, and/or a management menu (item). The indicator indicating the object may be displayed in the form of an icon, a thumbnail, an image, or text. The category and type of the object may be information based on a major classification and a minor classification of the object. For example, in the case of a man object, the category may be classified as a person, and the type may be classified as a man. In the case of a sun object, the category may be classified as a background, and the type may be classified as the sun. The electronic device 101 may change an order of the object information or change the object to a generated object using the management menu (item).

With reference to FIG. 5C, an object list 37b is illustrated in which information on objects is distinguished and displayed according to attributes of the objects. The electronic device 101 may classify information on objects according to attributes of the objects and display the information in the object list 37b. For example, the attributes of the objects may include an original attribute, a modified attribute, an added attribute, and/or a deleted attribute. As an example, objects of a sun, a bus, a woman, and a building may have the original attribute. An object of a man may have the modified attribute, and an object of a ginkgo tree may have the added attribute. An object of a sparrow may have the deleted attribute. The electronic device 101 may display information on the sun object, the bus object, the woman object, and the building object having the original attribute in a first area 15a (or an original attribute area) of the object list 37b. The electronic device 101 may display information on the man object having the modified attribute in a second area 15b (or a modified attribute area) of the object list 37b, and information on the ginkgo tree object having the added attribute in a third area 15c (or an added attribute area) of the object list 37b. The electronic device 101 may display information on the sparrow object having the deleted attribute in a fourth area 15d (or a deleted attribute area) of the object list 37b.

For example, when information 39 on an object of a woman displayed in the object list 37b is selected, the electronic device 101 may move the video to a time point including the object of the woman. For example, when a management menu included in the information 39 on the object of the woman is selected, the electronic device 101 may display a list of candidate objects for changing the object of the woman to a generated object.

With reference to FIG. 5D, a video in which a display time point is shifted is illustrated. As an example, as described with reference to FIG. 5A, the electronic device 101 may display object lists 37a and 37b while displaying a video at a time point c. When information 39 on an object of a woman included in the object lists 37a and 37b is selected, the electronic device 101 may move the video to a time point at which the object of the woman 3a first appears in the video. As illustrated in FIG. 5D, the object of the woman 3a may first appear at a time point d of the video. The electronic device 101 may move the video displayed at the time point c to the time point d and display the video.

For example, an object's timeline may include information on the object. The information on the object may include an indicator indicating the object, a category, a type, appearance time information, and disappearance time information. The indicator indicating the object may be displayed in the form of an icon, a thumbnail, an image, or text. As illustrated in FIG. 5D, as an example, a timeline 3b corresponding to an object of a woman 3a may be displayed in the timeline area. The timeline 3b corresponding to the object of the woman 3a may include information on an indicator indicating the woman 3a, a category (or type) of person, an appearance time of 4 minutes 2 seconds, and a disappearance time of 9 minutes 14 seconds. As an example, when a number of timelines of objects included at a specific time point in the video exceeds a number of timelines displayed (displayable) in the timeline area, the processor 120 may provide a scroll UI 17 for displaying the excess timelines.

With reference to FIG. 5E, a candidate object list 41 is illustrated. As an example, when a management menu included in information 39 on an object of a woman is selected, the electronic device 101 may display a candidate object list 41 for changing the object of the woman to a generated object. For example, the candidate object list 41 may include generated objects generated by an object generation artificial intelligence model. As an example, the candidate object list 41 may include template images representing various forms commonly applicable within a category (e.g., person/woman) to which the object belongs. When one of the template images is selected, the electronic device 101 may generate a new object based on the object image and the selected template image. When one of the generated objects included in the candidate object list 41 is selected, the electronic device 101 may change the object of the woman 3a to the selected generated object.

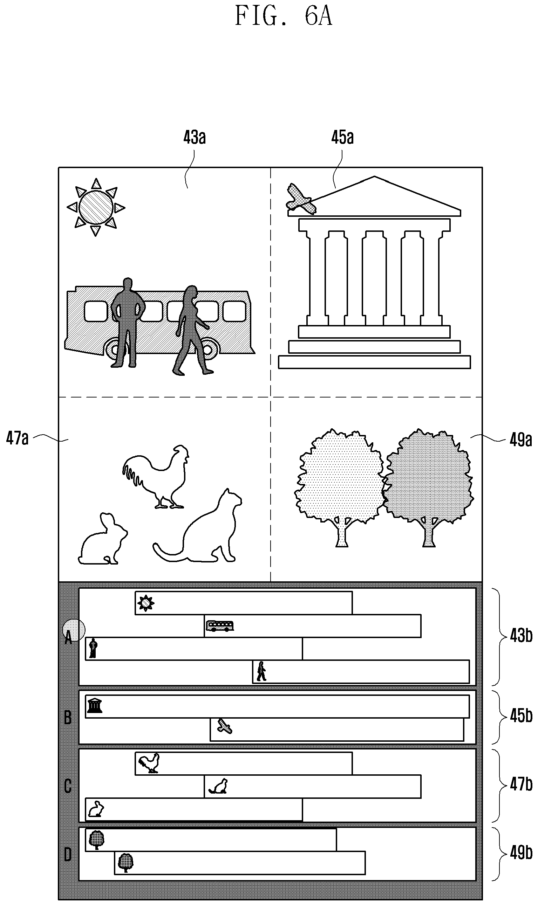

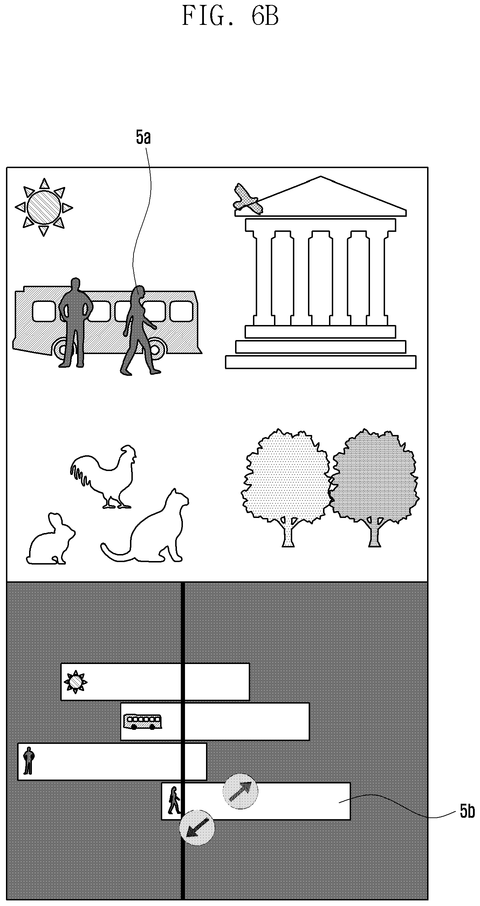

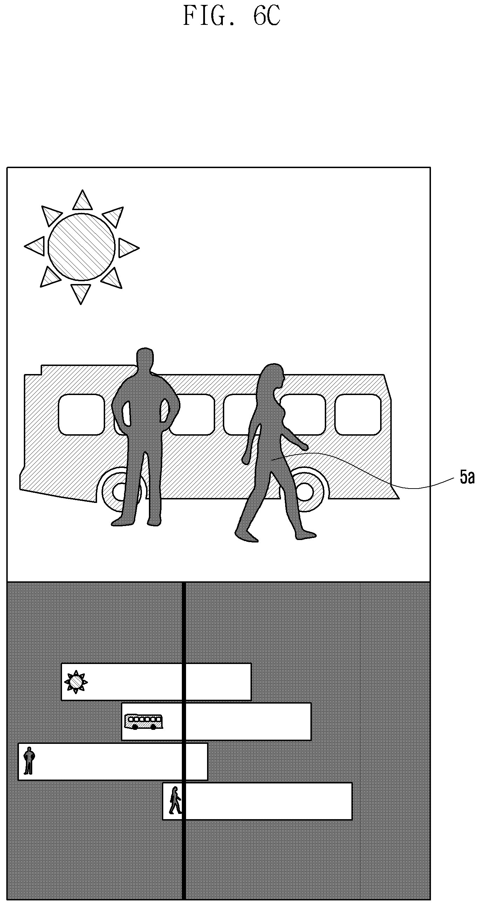

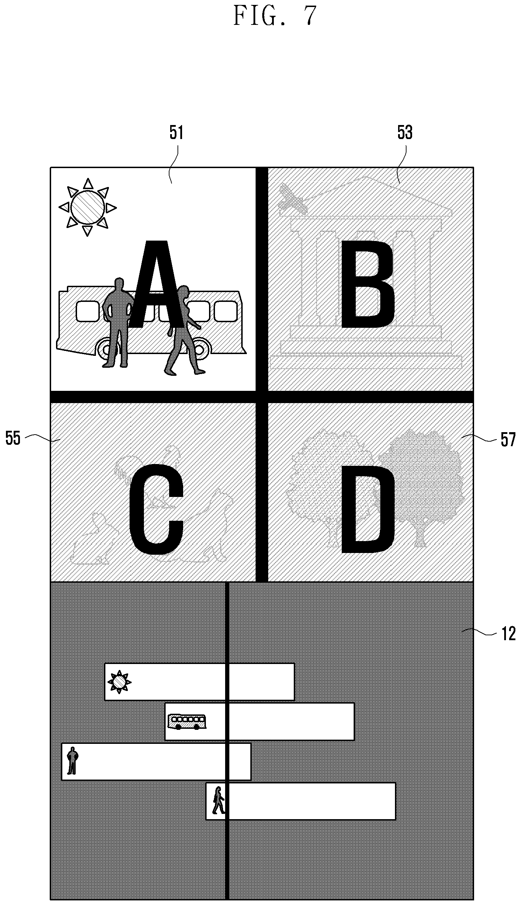

FIGS. 6A, 6B, 6C and 7 are diagrams illustrating a method of displaying a plurality of objects within content and a timeline corresponding to the plurality of objects according to various embodiments.

With reference to FIG. 6A, a video divided into a plurality of regions is illustrated. The video may include a plurality of objects. The electronic device 101 may display timelines respectively corresponding to the plurality of objects in the timeline area 12. A number of timelines of objects included in the video may be greater than a number of timelines displayable in the timeline area 12. If a number of timelines of objects included in the video exceeds a preconfigured number (e.g., a number of timelines displayable in the timeline area 12), the electronic device 101 may display the timelines based on locations of the objects included in the video. For example, the electronic device 101 may divide the video into a plurality of regions. The plurality of divided regions may not be displayed. The electronic device 101 may group timelines of objects included in each of the plurality of regions into groups and display the groups in the timeline area 12. As an example, the electronic device 101 may divide the video into a first region 43a, a second region 45a, a third region 47a, and a fourth region 49a. The first region 43a may include four objects, and the second region 45a may include two objects. The third region 47a may include three objects, and the fourth region 49a may include two objects. The electronic device 101 may group objects included in the video by each region. The electronic device 101 may group timelines of the objects included in each region. For example, the electronic device 101 may display, in the timeline area 12, a first group 43b including timelines of objects included in the first region 43a, a second group 45b including timelines of objects included in the second region 45a, a third group 47b including timelines of objects included in the third region 47a, and a fourth group 49b including timelines of objects included in the fourth region 49a.

With reference to FIG. 6B, a screen in which one of a plurality of groups included in the timeline 12 is selected is illustrated. When one of the displayed groups is selected, the electronic device 101 may display timelines of objects included in the selected group in the timeline area 12. As an example, the first group 43b may include timelines of a sun object, a bus object, a man object, and a woman object. When the first group 43b is selected from the timeline area 12, the electronic device 101 may display timelines of the sun object, the bus object, the man object, and the woman object included in the first group 43b in the timeline area 12.

For example, the electronic device 101 may receive a user input to zoom in or out on a timeline of an object. As an example, the zoom-in user input may include a pinch-out gesture, and the zoom-out user input may include a pinch-in gesture. The electronic device 101 may perform zoom-in or zoom-out on the video based on an object corresponding to a timeline on which the zoom-in or zoom-out user input is received. As an example, as illustrated in FIG. 6B, the electronic device 101 may receive a zoom-in user input on a timeline 5b corresponding to an object of a woman 5a included in the video. The electronic device 101 may perform an operation corresponding to the received user input.

With reference to FIG. 6C, a video zoomed in according to a user input is illustrated. When the electronic device 101 receives a zoom-in user input on a timeline 5b of a woman object, the electronic device 101 may zoom in on the video based on the woman object 5a. As an example, when the electronic device 101 receives a zoom-out user input on the timeline 5b of the woman object, the electronic device 101 may zoom out on the video based on the woman object 5a as.

With reference to FIG. 7, according to an example, a video divided into a plurality of regions is illustrated. If a number of timelines of a plurality of objects included in the video exceeds a number of timelines displayable in the timeline area 12, the electronic device 101 may divide the video into a plurality of regions. The electronic device 101 may display the plurality of divided regions. As an example, the electronic device 101 may divide the video into a region A 51, a region B 53, a region C 55, and a region D 57, and display each of the divided regions. When one of the plurality of divided regions is selected, the electronic device 101 may display timelines of objects included in the selected region in the timeline area 12. As an example, when the region A 51 is selected from the plurality of divided regions, the electronic device 101 may display timelines corresponding to a sun object, a bus object, a man object, and a woman object included in the region A 51 in the timeline area 12.

For example, the electronic device 101 may receive a zoom-in or zoom-out user input on a timeline of an object. The electronic device 101 may zoom in or out on the video based on an object corresponding to a timeline on which the zoom-in or zoom-out user input is received.

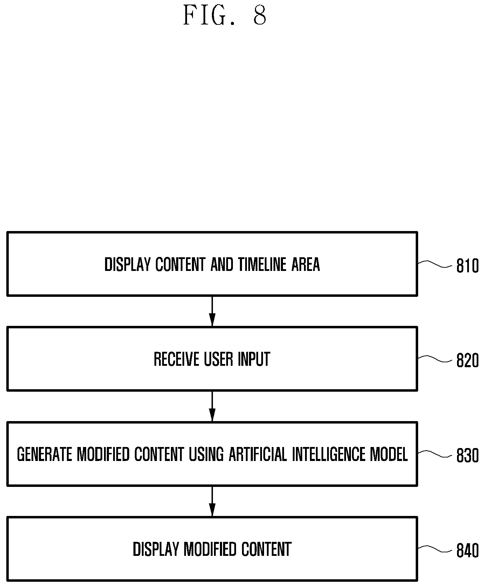

FIG. 8 is a flowchart illustrating a method of editing content according to various embodiments.

In the following embodiments, the operations may be performed sequentially, but are not necessarily performed sequentially. For example, the order of the operations may be changed, and at least two of the operations may be performed in parallel.

According to an embodiment, operations 810 to 840 may be understood as being performed by a processor (e.g., the processor 120 of FIG. 2) of an electronic device (e.g., the electronic device 101 of FIG. 2).

With reference to FIG. 8, the electronic device 101 may display content and a timeline area (810). For example, the electronic device 101 may display content including a first object in a first portion of the display 160 and display a timeline area associated with the content in a second portion of the display 160. As an example, the content may include a video. For example, the first object included in the video (content) may include an original object and/or a generated object generated by an artificial intelligence model. The video may include at least one object.

The timeline area may include a timeline (e.g., a time period) corresponding to the first object and a first indicator indicating the first object. For example, the timeline corresponding to the first object may indicate a period from a time point at which the first object appears in the video to a time point at which the first object disappears from the video.

As an example, the electronic device 101 may display timelines in a timeline area by distinguishing the timelines according to attributes of an object. For example, the attributes of the object may include an original attribute, an added attribute, and/or a modified attribute. The electronic device 101 may distinguish and display, in the timeline area, a timeline of an object having the original attribute, a timeline of an object having the added attribute, and/or a timeline of an object having the modified attribute. As an example, the electronic device 101 may delete an object included in a video according to a user input. The electronic device 101 may delete the object from the video, assign a deleted attribute to the deleted object, and retain information on the deleted object. The electronic device 101 may distinguish and display, in the timeline area, a timeline of the deleted object from timelines of objects having other attributes.

For example, the video may include a plurality of objects. If a number of timelines of the plurality of objects exceeds a number of timelines displayable in a timeline area, the electronic device 101 may divide the video into a plurality of regions. As an example, the electronic device 101 may not display information indicating the division of the regions. The electronic device 101 may group timelines of objects included in each of the plurality of divided regions into groups and display the groups in the timeline area. As another example, if a number of timelines of the plurality of objects exceeds a number of timelines displayed in the timeline area, the electronic device 101 may divide the video into a plurality of regions and display the plurality of divided regions. When one of the plurality of regions is selected, the electronic device 101 may display timeline for objects included in the selected region. As an example, the electronic device 101 may provide a scrolling UI to display timelines exceeding the displayable number without dividing the video.

For example, when a user input to zoom in or out is received on a timeline of the object, the electronic device 101 may enlarge or reduce an area of a video in which the object is located.

The electronic device 101 may receive a user input (820). For example, the electronic device 101 may receive a user input associated with a timeline or a first indicator. As an example, the electronic device 101 may receive a user input on a timeline of a first object included in a video or a first object included in a timeline area. When the user input is received, the electronic device 101 may display an image effect on the selected first object and/or on a timeline of the selected first object. For example, the image effect may include a color change, a border change, and/or highlighting.

The electronic device 101 may generate modified content using an artificial intelligence model (830). For example, the electronic device 101 may generate modified content by, at least partially based on a user input, replacing a first object with a second object generated using the artificial intelligence model.

For example, when a first object is selected, the electronic device 101 may display a list of candidate objects generated by an artificial intelligence model. When one (e.g., a second object) of the candidate objects is selected, the electronic device 101 may replace the first object included in a video with the second object. As an example, when the first object included in the video is selected, the electronic device 101 may display an object change item (indicator) on the first object. For example, the object change item may be displayed in the form of a button or an icon. When the object change item is selected, the electronic device 101 may replace the first object with the second object immediately without displaying the list of candidate objects.

For example, the electronic device 101 may display an object list according to a user selection. When a management menu is selected from information of an object included in the object list, the electronic device 101 may display a list of candidate objects including a plurality of candidate objects generated by an artificial intelligence model. When a second object is selected from the plurality of candidate objects, the electronic device 101 may replace the first object with the second object. The electronic device 101 may display modified content in a first portion of the display 160 (840).

Various embodiments of the disclosure may facilitate identification of attributes of an object associated with editing. Various embodiments of the disclosure may facilitate editing of the object.

As an example, the electronic device 101 may include a display 160, at least one processor 120, and a memory 130 storing instructions executed by the at least one processor 120. The instructions stored in the memory 130 may be configured to cause the electronic device 101 to display, through the display 160, content including a first object in a first portion and to display a timeline area associated with the content in a second portion. The timeline area may include a timeline corresponding to the first object and a first indicator indicating the first object. The instructions may be configured to cause the electronic device 101 to receive a user input associated with the timeline or the first indicator. The instructions may be configured to cause the electronic device 101 to, at least partially based on the user input, generate modified content using an artificial intelligence model by replacing the first object with a second object generated using the artificial intelligence model. The instructions may be configured to cause the electronic device 101 to display the modified content in the first portion through the display.

As an example, the instructions may be configured to cause the electronic device 101 to, when the first object is replaced with the second object, replace the first indicator with a second indicator indicating the second object and to display the second indicator.

As an example, the instructions may be configured to cause the electronic device 101 to display a plurality of timeline areas associated with the modified content in the second portion, where each of the plurality of timeline areas may include the timeline and another timeline corresponding to the second object.

As an example, the instructions may be configured to cause the electronic device 101 to, based on another user input for deleting the first object, delete the first object from the content and to display a timeline corresponding to the deleted first object at another location in the second portion.

As an example, the content may include a plurality of first objects. The instructions may be configured to cause the electronic device 101 to divide the content into a plurality of regions when a number of timelines corresponding to the plurality of first objects exceeds a number of timelines displayable in the timeline area. The instructions may be configured to cause the electronic device 101 to group timelines corresponding to at least one first object included in the respective region among the plurality of first objects into groups and to display the group including the timelines corresponding to the at least one first object.

As an example, the content may include a plurality of first objects. The instructions may be configured to cause the electronic device 101 to, when a number of timelines corresponding to the plurality of first objects exceeds a number of timelines displayable in the timeline area, divide the content into a plurality of regions and to display the plurality of regions. The instructions may be configured to cause the electronic device 101 to, when one of the plurality of regions is selected, display timelines corresponding to at least one first object included in the selected region.

As an example, the instructions may be configured to cause the electronic device 101 to, when a zoom-in input is received on a timeline corresponding to the first object, enlarge an area of content in which the first object is located.

As an example, the instructions may be configured to cause the electronic device 101 to, when an input for selecting the first object is received, display an image effect on at least one of the selected first object or a timeline corresponding to the selected first object.

As an example, the instructions may be configured to cause the electronic device 101 to, when an input for selecting the first object is received, display at least one candidate object generated by the artificial intelligence model. The instructions may be configured to cause the electronic device 101 to, when a second object is selected from the at least one candidate object, generate the modified content by replacing the first object with the second object.

As an example, the instructions may be configured to cause the electronic device 101 to display a list of at least one first object included in the content according to a user input. The instructions may be configured to cause the electronic device 101 to, when one of the at least one first object included in the list is selected, display the content at a time point corresponding to a start time point of a timeline of the selected object.

As an example, a method of editing content may include displaying content including a first object in a first portion of a display 160 and displaying a timeline area associated with the content in a second portion of the display 160. The timeline area may include a timeline corresponding to the first object and a first indicator indicating the first object. The method may include receiving a user input associated with the timeline or the first indicator. The method may include, at least partially based on the user input, generating modified content using an artificial intelligence model by replacing the first object with a second object generated using the artificial intelligence model. The method may include displaying the modified content in the first portion.

As an example, the method may further include, when the first object is replaced with the second object, replacing the first indicator with a second indicator indicating the second object and displaying the second indicator.

As an example, the displaying of the timeline area may include displaying a plurality of timeline areas associated with the modified content in the second portion. The plurality of timeline areas may each include the timeline and another timeline corresponding to the second object.

As an example, the method may further include deleting the first object from the content based on another user input for deleting the first object. The displaying of the timeline area may include displaying a timeline corresponding to the deleted first object at another location in the second portion.

As an example, the content may include a plurality of first objects. The method may further include dividing the content into a plurality of regions when a number of timelines for the plurality of first objects exceeds a number of timelines displayable in the timeline area. The displaying of the timeline area may include grouping timelines corresponding to at least one first object included in the respective region among the plurality of first objects into groups and displaying the group including the timelines corresponding to the at least one first object.

As an example, the content may include a plurality of first objects. The method may further include dividing the content into a plurality of regions and displaying the plurality of regions when a number of timelines for the plurality of first objects exceeds a number of timelines displayable in the timeline area. The displaying of the timeline area may include displaying, when one of the plurality of regions is selected, timelines corresponding to at least one first object included in the selected region.

As an example, the method may further include enlarging a region of content in which the first object is located when a zoom-in input is received on a timeline corresponding to the first object.

As an example, the method may further include displaying, when an input for selecting the first object is received, an image effect on at least one of the selected first object or the timeline corresponding to the selected first object.

As an example, the method may further include displaying at least one candidate object generated by the artificial intelligence model when an input for selecting the first object is received. The generating of the modified content may include replacing the first object with the second object to generate the modified content when the second object is selected from the at least one candidate object.

As an example, instructions recorded on a non-transitory computer-readable storage medium on which a program for performing a method of editing content is recorded may be configured to cause an electronic device to display content including a first object in a first portion of a display and display a timeline area associated with the content in a second portion of the display. The timeline area may include a timeline corresponding to the first object and a first indicator indicating the first object. The instructions may be configured to cause the electronic device to receive a user input associated with the timeline or the first indicator. The instructions may be configured to cause the electronic device to generate modified content using an artificial intelligence model by replacing the first object with a second object generated using the artificial intelligence model at least partially based on the user input. The instructions may be configured to cause the electronic device to display the modified content in the first portion.

It should be appreciated that various examples of the disclosure and the terms used therein are not intended to limit the technological features set forth herein to particular examples and include various changes, equivalents, or replacements for a corresponding example. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various examples of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an example, the module may be implemented in a form of an application-specific integrated circuit (ASIC).

Various examples as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities, and some of the multiple entities may be separately disposed in different components. According to various examples, one or more of the above-described components may be omitted, or one or more other components may be added. Alternatively or additionally, a plurality of components (e.g., modules or programs) may be integrated into a single component. In such a case, according to various examples, the integrated component may still perform one or more functions of each of the plurality of components in the same or similar manner as they are performed by a corresponding one of the plurality of components before the integration. According to various examples, operations performed by the module, the program, or another component may be carried out sequentially, in parallel, repeatedly, or heuristically, or one or more of the operations may be executed in a different order or omitted, or one or more other operations may be added.

The effects of the disclosure are not limited to those mentioned above, and other unmentioned effects will be clearly understood by a person skilled in the art from the above description.

## Claims

1. An electronic device, comprising:
a display;
at least one processor; and
a memory configured to store instructions executed by the at least one processor,
wherein the instructions stored in the memory are configured to cause the electronic device to:
display content including a first object in a first portion, and display a timeline area associated with the content in a second portion through the display, wherein the timeline area comprises a timeline corresponding to the first object and a first indicator indicating the first object,
receive a user input associated with the timeline or the first indicator, generate modified content using an artificial intelligence model by replacing the first object with a second object generated using the artificial intelligence model at least partially based on the user input, and
display the modified content in the first portion through the display.

2. The electronic device of claim 1, wherein the instructions stored in the memory are configured to cause the electronic device to, when the first object is replaced with the second object, replace the first indicator with a second indicator indicating the second object, and display the second indicator.

3. The electronic device of claim 1, wherein the instructions stored in the memory are configured to cause the electronic device to display a plurality of timeline areas associated with the modified content in the second portion, and
each of the plurality of timeline areas includes the timeline and another timeline corresponding to the second object.

4. The electronic device of claim 1, wherein the instructions stored in the memory are configured to cause the electronic device to:
delete the first object from the content based on another user input for deletion of the first object, and
display a timeline corresponding to the deleted first object at another location in the second portion.

5. The electronic device of claim 1, wherein the content comprises a plurality of first objects,
the instructions stored in the memory are configured to cause the electronic device to:
divide the content into a plurality of regions, when a number of timelines corresponding to the plurality of first objects exceeds a number of timelines displayable in the timeline area,
group timelines corresponding to at least one first object included in the respective region among the plurality of first objects into groups, and
display the groups including timelines corresponding to the at least one first object.

6. The electronic device of claim 1, wherein the content comprises a plurality of first objects, and
the instructions stored in the memory are configured to cause the electronic device to:
divide the content into a plurality of regions, when a number of timelines corresponding to the plurality of first objects exceeds a number of timelines displayable in the timeline area,
display the plurality of regions, and
display, when one of the plurality of regions is selected, a timeline corresponding to at least one first object included in the selected region.

7. The electronic device of claim 6, wherein the instructions stored in the memory are configured to cause the electronic device to, when a zoom-in input is received on a timeline corresponding to the first object, zoom in an area of content in which the first object is located.

8. The electronic device of claim 1, wherein the instructions stored in the memory are configured to cause the electronic device to, when an input for selecting the first object is received, display an image effect on at least one of the selected first object or a timeline corresponding to the selected first object.

9. The electronic device of claim 1, wherein the instructions stored in the memory are configured to cause the electronic device to:
display at least one candidate object generated by the artificial intelligence model when an input for selecting the first object is received, and
generate the modified content by replacing the first object with the second object, when the second object is selected from the at least one candidate object.

10. The electronic device of claim 1, wherein the instructions stored in the memory are configured to cause the electronic device to:
display a list of at least one first object included in the content according to a user input, and
display, when one of the at least one first object included in the list is selected, the content at a time point corresponding to a start time of a timeline of the selected one object.

11. A method of editing content, the method comprising:
displaying content including a first object in a first portion of a display, and displaying a timeline area associated with the content in a second portion of the display, wherein the timeline area includes a timeline corresponding to the first object and a first indicator indicating the first object;
receiving a user input associated with the timeline or the first indicator;
generating modified content using an artificial intelligence model by replacing the first object with a second object generated using the artificial intelligence model at least partially based on the user input; and
displaying the modified content in the first portion.

12. The method of claim 11, further comprising replacing, when the first object is replaced with the second object, the first indicator with a second indicator indicating the second object, and displaying the second indicator.

13. The method of claim 11, wherein displaying the timeline area comprises displaying a plurality of timeline areas associated with the modified content in the second portion, and
each of the plurality of timeline areas includes the timeline and another timeline corresponding to the second object.

14. The method of claim 11, further comprising deleting the first object from the content based on another user input for deletion of the first object,
wherein displaying the timeline area comprises displaying a timeline corresponding to the deleted first object at another location in the second portion.

15. The method of claim 11, wherein the content comprises a plurality of first objects,
the method further comprises dividing, when a number of timelines corresponding to the plurality of first objects exceeds a number of timelines displayable in the timeline area, the content into a plurality of regions,
wherein displaying the timeline area comprises grouping timelines corresponding to at least one first object included in the respective region among the plurality of first objects into groups, and displaying the groups including timelines corresponding to the at least one first object.
